# EUROPÄISCHE PATENTSCHRIFT

(11) **EP 2 430 400 B1**
(45) Veröffentlichungstag und Bekanntmachung des Hinweises auf die Patenterteilung: **30.05.2018**
(21) Anmeldenummer: 10719928.3
(22) Anmeldetag: 27.04.2010
(51) Int. Cl.: B61C 17/12, G01D 5/14, G01D 5/244, G01D 5/347

(54) **ANORDNUNG MIT EINEM DIE LAGE EINES MECHANISCHEN BEWEGTEILS ERFASSENDEN POSITIONSGEBERS**
ARRANGEMENT WITH A POSITION ENCODER FOR DETECTING THE POSITION OF A MOVING MEMBER
DISPOSITIF AVEC UN CODEUR DE POSITION POUR DÉTECTER LA POSITION D'UN ORGANE MOBILE

(30) Priorität: 15.05.2009 DE 102009022019
(43) Veröffentlichungstag der Anmeldung: 21.03.2012
(73) Patentinhaber: Siemens Aktiengesellschaft, 80333 München (DE)
(72) Erfinder: WEBER, Matthias, Alexander, 91052 Erlangen (DE)
(86) Internationale Anmeldenummer: PCT/EP2010/055586
(87) Internationale Veröffentlichungsnummer: WO 2010/130571

(56) Entgegenhaltungen:
- JP-A- 2000 168 612
- US-A- 4 412 182
- US-A- 4 982 189
- US-A1- 2004 168 606

## Beschreibung

Aus der US 4,982,189 ist eine Codiereinrichtung bekannt, mit der eine Drehbewegung in ein digitales Bitmuster umgesetzt wird. Auf diese Weise ist es möglich, für die Drehbewegung Totbereiche festzulegen, in denen eine Drehbewegung, beispielsweise beim Anheben einer Last, keine Wirkung entfaltet. Im Totbereich verbleibt die Last mit anderen Worten trotz Drehbewegung auf der gleichen Höhe. Wird jedoch durch weiteres Verdrehen des Griffs der Totbereich verlassen, kommt es zu einem langsamen Anheben, das durch weiteres Verdrehen langsam beschleunigt werden kann. In einem weiteren Bereich kann die Beschleunigung des Anhebens bei einem weiteren Verdrehen vergrößert werden. Dies wird erreicht durch eine so genannten Codierscheibe, die auf unterschiedlichen Radien angeordnete Codierfenster aufweist. Diese Codierscheibe befindet sich im Wege von Lichtstrahlen, die von einer Lichtquelle ausgesendet und im Falle eines Fensters in der Codierscheibe auf einen optischen Detektor fallen, der ein elektrisches Ausgangssignal erzeugt. Bei einer Drehbewegung wird somit durch jeden Detektor ein digitales Rechteckmuster erzeugt. Auf die Anzahl der Detektoren entspricht die Anzahl der Radien auf der optischen Scheibe. Somit sind verschiedene Rechteckmuster erzeugbar, die mit Hilfe einer internen Logik in unterschiedliche Empfindlichkeitsbereiche der Drehbewegung umgesetzt werden können.

Eine weitere Anordnung ist aus der US 4,412,182 bekannt.

Handelt es sich bei einem mechanischen Bewegteil um ein drehbewegbares Bewegteil, beispielsweise in Form eines Schalthebels, dann ist es bekannt, zur Gewinnung einer der Drehstellung des Schalthebels entsprechenden Reaktionsgröße für die Auslösung beispielsweise einer bestimmten Handlung, wie beispielsweise Abbremsen oder Anfahren beim Einsatz in der Bahntechnik, den Schalthebel auf einer Nockenwelle anzubringen, auf der nebeneinander Nockenscheiben mit Nocken in unterschiedlicher Winkelposition vorhanden sind; jede Nocke hat eine spezifische Kontur, die winkelabhängig ein Schaltelement mechanisch ansteuert. Bei einem Drehen des Bewegteils bzw. des Schalthebels werden die Nocken an Tasten vorbeigeführt, die beim Vorbeiführen jeweils ein Signal erzeugen. Wegen der mehreren Nockenscheiben werden bei einem Verschwenken des Schalthebels bzw. bei einem Verdrehen des drehbaren Bewegteils mittels der Tasten Bitmuster erzeugt, die erfasst und einem Zuordnungs-Tabellenbaustein - auch Look-Up-Table (siehe dazu beispielsweise die Internet-Veröffentlichung unter "http://de.wikipedia.org/wiki/Look-Up-Table") genannt - zugeführt werden. Dieser Zuordnungs-Tabellenbaustein enthält eine Spalte, in der die verschiedenen Bitmuster untereinander aufgeführt sind; eine zweite Spalte in dem Zuordnungs-Tabellenbaustein enthält Angaben über jeweils die Stellung, die einem Bitmuster zugeordnet ist. Wird ein bestimmtes Bitmuster erzeugt, dann wird dieses mittels des Zuordnungs-Tabellenbausteins dekodiert, und mittels eines nachgeordneten Ausgabebausteins eine Reaktionsgröße erzeugt. Erfasst werden können hiermit nur diskrete Änderungen der Position des drehbaren Bewegteils bzw. Schalthebels.

Ferner ist es bekannt, bei einem mechanischen Bewegteil als drehbares Bewegteil in Form eines Schalthebels auf einer den Schalthebel tragenden Welle einen (oder mehrere) Drehwinkelgeber anzuordnen, der in bekannter Weise als Potentiometer, als optischer oder magnetischer Drehwinkelgeber etc. ausgeführt ist. Von diesem Drehwinkelgeber werden Analogwerte abgegeben und mittels eines Analog-Digital-Umsetzers in digitale Werte umgesetzt. Aus diesen digitalen Werten kann in einer Auswerteeinrichtung eine Reaktionsgröße gebildet werden, die dem jeweiligen Drehwinkel bzw. der Stellung des Schalthebels entspricht. Erfasst werden können hiermit kontinuierliche Positionsänderungen des Schalthebels bzw. des drehbaren Bewegteils. Eine solche Anordnung für ein als Lenkrad eines Kraftfahrzeuges ausgebildetes mechanisches Bewegteil ist aus der JP 2000-168612 A bekannt. Das Dokument US 2004/0168606 A1 beschreibt eine Anordnung zur kontinuierlichen Erfassung der Lage eines Schalthebels im Führerstand einer Lokomotive, mit einem Positionsgeber, der ein der Lage entsprechendes kontinuierliches elektrisches Messsignal abgibt, und mit einer nachgeordneten Auswerteeinrichtung.

Der Erfindung liegt die Aufgabe zugrunde, eine Anordnung mit den im kennzeichnenden Teil des Patentanspruchs 1 angegebenen Merkmalen zu schaffen, mit der Reaktionsgrößen sowohl bei rein kontinuierlichen Positionsänderungen sowie bei rein diskreten Positionsänderungen als auch bei gemischten kontinuierlichen / diskreten Positionsänderungen mit wenig Aufwand gewinnbar sind.

Zur Lösung dieser Aufgabe dient erfindungsgemäß eine Anordnung mit einem die Lage eines als Schalthebel im Führerstand einer Lokomotive ausgebildeten, mechanischen Bewegteil kontinuierlich erfassenden und ein entsprechendes elektrisches Messsignal abgebenden Positionsgeber mit einem nachgeordneten, an seinem Ausgang Bitmuster abgebenden Analog-Digital-Umsetzer, dem eine Auswerteeinrichtung nachgeschaltet ist, die einen Abbildungs-Baustein enthält, in dem jeweils mehrere wertemäßig beieinander liegende Bitmuster auf jeweils einen Stellungswert von mehreren Stellungswerten für Positionsbereiche des mechanischen Bewegteils abgebildet werden, und einen Ausgabebaustein enthält, der den Stellungswert für die Position erfasst, auf den bei einem einer erfassten Position des Bewegteils entsprechenden Bitmuster dieses Bitmuster abgebildet ist, und zumindest eine entsprechende Reaktionsgröße zur Verfügung stellt. Bei dem Abbildungs-Baustein handelt es sich um einen Zuordnungs-Tabellenbaustein, der in einer Spalte mehrere Bitmusterbereiche aufweist, wobei jeder Bitmusterbereich mehrere jeweils wertemäßig beieinander liegende Bitmuster enthält, und in einer weiteren Spalte den Bitmusterbereichen entsprechende Stellungswerte für Positionsbereiche des mechanischen Bewegteils aufweist;
der Ausgabebaustein erfasst bei einem einer erfassten Position des Bewegteils entsprechenden Bitmuster über den zugehörigen Bitmusterbereich den diesem Bitmusterbereich entsprechenden Stellungswert für die Position und stellt zumindest eine entsprechende Reaktionsgröße zur Verfügung.

Ein wesentlicher Vorteil der erfindungsgemäßen Anordnung besteht darin, dass unabhängig davon, ob die Lage eines mechanischen Bewegteils kontinuierlich und/oder zu diskreten Positionen erfasst werden soll, mit einem einzigen die Lage des mechanischen Bewegteils kontinuierlich erfassenden und ein entsprechendes elektrisches Messsignal abgebenden Positionsgebers gearbeitet werden kann. Damit können Positionsgeber derselben Ausgestaltung sowohl zur Erfassung diskreter Positionen als auch zur Erfassung kontinuierlich sich ändernder Positionen verwendet werden, was zu einer erheblichen Vereinfachung in der Herstellung und damit auch zu einer Reduzierung der Herstellungskosten führt. Es ist nämlich erfindungsgemäß zu dieser Vereinfachung nur erforderlich, den Abbildungs-Baustein so auszuführen, dass bei einem Bitmuster über eine Abbildung die zugehörige Stellung bzw. der zugehörige Stellungswert ermittelt und über einen nachgeordneten Ausgabebaustein die dem Stellungswert entsprechende Reaktionsgröße abgegeben wird.

Die erfindungsgemäße Anordnung schafft ferner die vorteilhafte Möglichkeit, in einfacher Weise den Abbildungsbaustein so auszuführen, dass jeweils eine gleichgroße Anzahl von wertemäßig beieinander liegenden Bitmustern auf jeweils einen Stellungswert abbildet wird. Sofern relativ wenige wertemäßig beieinander liegende Bitmuster auf einen Stellungswert abgebildet werden, lässt sich nahezu kontinuierlich eine Reaktionsgröße gewinnen, die den Bewegungen des mechanischen Bewegteils entspricht.

Andererseits ist es ferner vorteilhaft, wenn der Abbildungs-Baustein so ausgeführt ist, dass zumindest auf einen Stellungswert eine größere Anzahl von Bitmustern abgebildet wird als auf die übrigen Stellungswerte. In diesem Fall können kontinuierliche und diskrete Positionserfassungen gemischt erfolgen. Es können auch auf alle Stellungswerte übereinstimmend eine relativ große Anzahl von Bitmustern abgebildet sein, so dass dann die Möglichkeit gegeben ist, im Rahmen einer Erfassung diskreter Positionen des mechanischen Bewegteils eine Reaktionsgröße zu gewinnen.

Der Zuordnungs-Tabellenbaustein seinerseits kann ebenfalls unterschiedlich ausgebildet sein. So wird es als vorteilhaft angesehen, wenn der Zuordnungs-Tabellenbaustein so ausgeführt ist, dass jeweils eine gleich große Anzahl von wertemäßig beieinander liegenden Bitmustern jeweils einen Bitmusterbereich bilden. Bei relativ kleinen Bitmusterbereichen lässt sich dann nahezu kontinuierlich eine Reaktionsgröße gewinnen, die den Bewegungen des mechanischen Bewegteils entspricht.

Es kann aber auch vorteilhaft sein, wenn der Zuordnungs-Tabellenbaustein so ausgeführt ist, dass zumindest ein Bitmusterbereich aus einer größeren Anzahl von Bitmustern gebildet sein kann als die übrigen Bitmusterbereiche. In diesem Fall können kontinuierliche und diskrete Positionserfassungen gemischt erfolgen oder bei einer relativ großen Anzahl von Bitmustern bei allen Bitmusterbereichen auch diskrete Positionen des mechanischen Bewegteils erfasst werden.

Die mechanischen Bewegteile, die bei der erfindungsgemäßen Anordnung einsetzbar sind, können unterschiedlich ausgebildet sein. So wird es als vorteilhaft angesehen, wenn das mechanische Bewegteil ein drehbares Bewegteil ist und der Positionsgeber ein Drehwinkelgeber ist. Dabei kann in vorteilhafter Weise das drehbewegbare Bewegteil kontinuierlich und/oder ein in Stufen drehbares Bewegteil sein.

Als besonders vorteilhaft wird es angesehen, wenn das drehbare Bewegteil ein Schalthebel ist.

Bei der erfindungsgemäßen Anordnung kann in vorteilhafter Weise das mechanische Bewegteil auch ein translatorisch bewegbares Bauteil sein und der Positionsgeber ein Weggeber sein. Auch hier ist es möglich, als translatorisch bewegbares Bewegteil ein kontinuierlich und/oder ein in Stufen bewegbares Bewegteil zu verwenden. Bei dem translatorisch bewegbaren Bewegteil kann es sich bevorzugt um ein Bedienelement handeln.

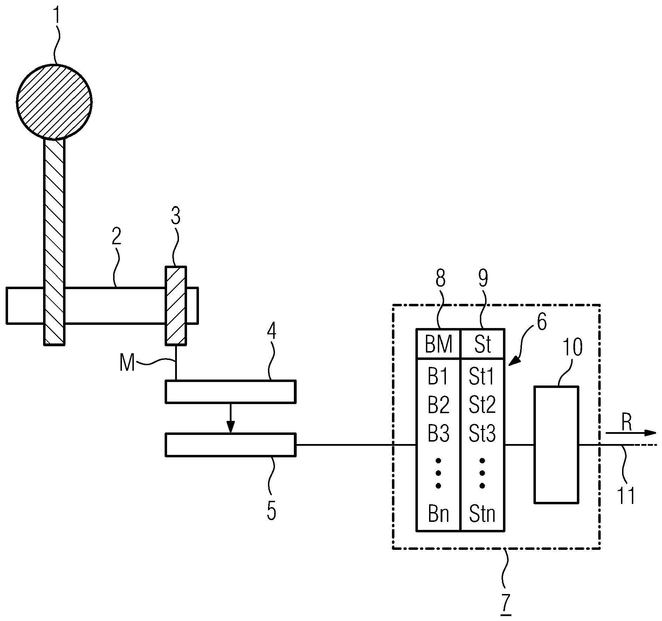

Zur weiteren Erläuterung der Erfindung ist in der Figur ein Ausführungsbeispiel einer erfindungsgemäßen Anordnung dargestellt.

Die in der Figur dargestellte Anordnung weist ein mechanisches Bewegteil 1 auf, das in dem vorliegenden Fall von einem Schalthebel, beispielsweise im Führerstand einer Lokomotive, gebildet ist. Das mechanische Bewegteil 1 ist auf einer Welle 2 gelagert, auf der außerdem in diesem Beispiel ein Drehwinkelgeber 3 angebracht ist (ggf. können auch mehrere Winkelgeber vorhanden sein); bei dem Drehwinkelgeber 3 kann es sich um ein Potentiometer, um eine an sich bekannte optisch oder magnetisch arbeitende Drehwinkelerfassungseinrichtung etc. handeln.

Der Drehwinkelgeber 3 erzeugt ein analoges elektrisches Messsignal M, das über eine Eingangsschnittstelle 4 einem Analog-Digital-Umsetzer 5 zugeführt ist. Am Ausgang dieses Analog-Digital-Umsetzers 5 entstehen demzufolge Bitmuster, die der jeweiligen Drehstellung des mechanischen Bewegteils 1 entsprechen. Bei diesen Bitmustern handelt es sich in der Regel um Dezimal-/Hexadezimalwerte.

Diese Bitmuster werden einem Abbildungs-Baustein zugeführt, bei dem es sich beispielsweise um einen Zuordnungs-Tabellenbaustein 6 handeln kann; der Zuordnung-Tabellenbaustein 6 ist Bestandteil einer Auswerteeinrichtung 7. In diesem Zuordnungs-Tabellenbaustein 6 sind in einer Spalte 8 "BM" Bitmusterbereiche B1 bis Bn aufgeführt; jeder Bitmusterbereich umfasst jeweils einige wertemäßig beieinander liegende Bitmuster. So gehören zu dem Bitmusterbereich B1 beispielsweise die Bitmuster bm1min bis bm1max, zu dem Bitmusterbereich B2 die Bitmuster bm2min bis bm2max usw. bis zu
dem Bitmusterbereich Bn die Bitmuster bmnmin bis bmnmax. In einer parallelen Spalte 9 "St" sind den Bitmusterbereichen B1 bis Bn Stellungswerte St1 bis Stn des mechanischen Bewegteils 1 zugeordnet. Erfasst der Zuordnungs-Tabellenbaustein 6 z.B. ein zu dem Bitmusterbereich B1 gehörendes Bitmuster bm12, dann wird dieses auf den Stellenwert St1 abgebildet, genauso wie ein anderes Bitmuster bm13 desselben Bitmusterbereichs B1. Dem Zuordnungs-Tabellenbaustein 8 ist ein Ausgabebaustein 10 nachgeordnet, der an seinem Ausgang 11 eine Reaktionsgröße R abgibt, mit der beispielsweise im Falle eines Schalthebels als mechanisches Bewegteil ein Anfahren oder Abbremsen gesteuert werden kann. Es können aus einem Bitmuster bei entsprechender Ausgestaltung des Ausgabebausteins 10 auch mehrere Reaktionsgrößen erzeugt werden.

Wird bei der dargestellten Anordnung ein anderes Bitmuster, z. B. bm2min, entsprechend der jeweiligen Position des mechanischen Bewegteil 1 an den Zuordnungs-Tabellenbaustein 6 abgegeben, dann wird dieses Bitmuster bm2min, weil es zu dem Bitmusterbereich B2 gehört, in dem Zuordnungs-Tabellenbaustein 6 auf den Stellungswert St2 abgebildet, und der Ausgabebaustein 10 stellt dann für den Stellungswert St2 eine Reaktionsgröße R bestimmter Größe zur Verfügung; diese Reaktionsgröße R gibt dann an, welche Stellung bzw. Winkelstellung das mechanische Bewegteil 1 bei dem erfassten Bitmuster eingenommen hat.

Es ist verständlich, dass die Auflösung der Drehwinkelstellung des mechanischen Bewegteil 1 im dargestellten Ausführungsbeispiel abhängig ist davon, wie viele wertemäßig nebeneinander liegende Bitmuster jeweils einem Bitmusterbereich B1 bis Bn zugeordnet sind bzw. auf einen Stellungswert abgebildet werden. Umfasst der einzelne Bitmusterbereich B1 bis Bn eine relativ kleine Anzahl von beieinander liegenden Bitmustern, dann lässt sich eine Reaktionsgröße R gewinnen, die quasi kontinuierlich der Drehbewegung des mechanischen Bewegteils 1 folgt. Es ist somit eine kontinuierliche Umsetzung der Position des mechanischen Bewegteils 1 in die Reaktionsgröße R möglich.

Fasst man eine relativ große Anzahl von wertemäßig beieinander liegenden Bitmustern jeweils zu einem Bitmusterbereich zusammen und bildet diese Bitmuster wiederum auf einen bestimmten Stellungswert St1 bis Stn ab, dann lassen sich diskrete Positionen oder Schaltpositionen des mechanischen Bewegteils 1 erfassen, weil bei einer relativ großen Anzahl wertemäßig beieinander liegender auftretender Bitmuster nur jeweils ein Bitmusterbereich betroffen ist und somit die relativ vielen Bitmuster pro Bitmusterbereich jeweils auf einen Stellungswert abgebildet werden. Die Reaktionsgröße bleibt somit über einen großen Bewegungsbereich des mechanischen Bewegteils 1 unverändert, wie dies bei der oben geschilderten bekannten Anordnung mit diskreter Winkelerfassung der Fall ist.

Ergänzend sei noch darauf hingewiesen, dass selbstverständlich bei ein und derselben Anordnung gemäß der Erfindung sowohl mit relativ kleinen Bitmusterbereichen als auch mit relativ großen Bitmusterbereichen gearbeitet werden kann, so dass mit ein und derselben mechanischen Ausführungsform der erfindungsgemäßen Anordnung kombiniert diskrete Positionen eines mechanischen Bewegteils als auch kontinuierliche Positionsveränderungen in eine Reaktionsgröße R umgesetzt werden können.

## Patentansprüche

1. Anordnung mit einem die Lage eines als Schalthebel im Führerstand einer Lokomotive ausgebildeten, mechanischen Bewegteils (1) kontinuierlich erfassenden und ein (oder mehrere) entsprechendes elektrisches Messsignal (M) abgebenden Positionsgeber (3) mit einem nachgeordneten, an seinem Ausgang Bitmuster abgebenden Analog-Digital-Umsetzer (5), dem eine Auswerteeinrichtung (7) nachgeschaltet ist, die einen Abbildungs-Baustein enthält, in dem jeweils mehrere wertemäßig beieinander liegende Bitmuster zusammen auf jeweils einen entsprechenden Stellungswert von mehreren Stellungswerten (St1 bis Stn) für Positionsbereiche des mechanischen Bewegteils (1) abgebildet werden, und
einen Ausgabebaustein (10) enthält, der den Stellungswert (St1 bis Stn) für die Position erfasst, auf den bei einem einer erfassten Position des Bewegteils (1) entsprechenden Bitmuster dieses Bitmuster abgebildet ist, und zumindest eine entsprechende Reaktionsgröße (R) zur Verfügung stellt, wobei der Abbildungs-Baustein ein Zuordnungs-Tabellenbaustein (6) ist, der in einer Spalte (8) mehrere Bitmusterbereiche (B1 bis Bn) aufweist, wobei jeder Bitmusterbereich (B1 bis Bn) mehrere jeweils wertemäßig beieinander liegende Bitmuster enthält, und in einer weiteren Spalte (9) den Bitmusterbereichen (B1 bis Bn) entsprechende Stellungswerte (St1 bis Stn) für Positionsbereiche des mechanischen Bewegteils (1) aufweist, und der Ausgabebaustein (10) bei einem einer erfassten Position des Bewegteils (1) entsprechenden Bitmuster über den zugehörigen Bitmusterbereich (B1 bis Bn) den diesem Bitmusterbereich entsprechenden Stellungswert (St1 bis Stn) für die Position erfasst und zumindest eine entsprechende Reaktionsgröße (R) zur Verfügung stellt.

2. Anordnung nach Anspruch 1,
**dadurch gekennzeichnet , dass** der Zuordnungs-Tabellenbaustein (6) so ausgeführt ist, dass jeweils eine gleich große Anzahl von wertemäßig beieinander liegenden Bitmustern jeweils einen Bitmusterbereich (B1 bis Bn) bilden.

3. Anordnung nach Anspruch 1,
**dadurch gekennzeichnet , dass** der Zuordnungs-Tabellenbaustein so ausgeführt ist, dass zumindest ein Bitmusterbereich aus einer größeren Anzahl von Bitmustern gebildet sein kann als die übrigen Bitmusterbereiche.

4. Anordnung nach einem der vorangehenden Ansprüche,
**dadurch gekennzeichnet , dass** mechanische Bewegteil (1) ein drehbares Bewegteil ist und der Positionsgeber ein Drehwinkelgeber (3) ist.

5. Anordnung nach Anspruch 4,
**dadurch gekennzeichnet, dass** das drehbare Bewegteil (1) ein kontinuierlich oder ein in Stufen drehbares Bewegteil ist.

6. Anordnung nach Anspruch 4 oder 5,
**dadurch gekennzeichnet, dass** das drehbare Bewegteil (1) ein Schalthebel ist.

7. Anordnung nach einem der Ansprüche 1 bis 3,
**dadurch gekennzeichnet, dass** das mechanische Bewegteil ein translatorisch bewegbares Bewegteil ist und der Positionsgeber ein Weggeber ist.

8. Anordnung nach Anspruch 7,
**dadurch gekennzeichnet, dass** das translatorisch bewegbare Bewegteil ein kontinuierlich oder ein in Stufen bewegbares Bewegteil ist.

9. Anordnung nach Anspruch 8,
**dadurch gekennzeichnet, dass** das translatorisch bewegbare Bewegteil ein Bedienelement ist.

## Claims

1. Arrangement comprising a position sensor (3) which continuously detects the position of a moving mechanical part (1) in the form of a shift lever in the driver's cabin of a locomotive and which outputs a (or several) corresponding electrical measurement signal (or signals) (M) and which comprises a downstream analogue/digital converter (5) which outputs bit patterns at its output and has an evaluation device (7) connected downstream, which evaluation device contains an mapping module in which a plurality of bit patterns which are similar to one another in respect of value are jointly each mapped to a respective corresponding position value from amongst a plurality of position values (St1 to Stn) for position ranges of the moving mechanical part (1), and contains an output module (10) which detects the position value (St1 to Stn) for the position, to which position value, when there is a bit pattern which corresponds to a detected position of the moving part (1), this bit pattern is mapped, and provides at least one corresponding response variable (R), wherein the mapping module is an association table module (6) which has a plurality of bit pattern ranges (B1 to Bn) in a column (8), wherein each bit pattern range (B1 to Bn) contains a plurality of bit patterns which are each similar to one another in respect of value, and has position values (St1 to Stn), which correspond to the bit pattern ranges (B1 to Bn), for position ranges of the moving mechanical component (1) in a further column (9), and the output module (10), when there is a bit pattern which corresponds to a detected position of the moving part (1), detects the position value (St1 to Stn), which corresponds to this bit pattern range, for the position by means of the associated bit pattern range (B1 to Bn) and provides at least one corresponding response variable (R).

2. Arrangement according to Claim 1, **characterized in that** the association table module (6) is designed such that an identical number of bit patterns which are similar to one another in respect of value respectively form a bit pattern range (B1 to Bn) in each case.

3. Arrangement according to Claim 1, **characterized in that** the association table module is designed such that at least one bit pattern range can be formed from a larger number of bit patterns than the usual bit pattern ranges.

4. Arrangement according to one of the preceding claims, **characterized in that** the moving mechanical part (1) is a rotatable moving part and the position sensor is a rotation angle sensor (3).

5. Arrangement according to Claim 4, **characterized in that** the rotatable moving part (1) is a moving part which can rotate continuously or a moving part which can rotate in steps.

6. Arrangement according to Claim 4 or 5, **characterized in that** the rotatable moving part (1) is a shift lever.

7. Arrangement according to one of Claims 1 to 3, **characterized in that** the moving mechanical part is a translationally moveable moving part and the position sensor is a displacement sensor.

8. Arrangement according to Claim 7, **characterized in that** the translationally moveable moving part is a moving part which can move continuously or a moving part which can move in steps.

9. Arrangement according to Claim 8, **characterized in that** the translationally movable moving part is an operator control element.

## Revendications

1. Système avec un capteur de position (3) détectant en continu l'emplacement d'une pièce mécanique mobile (1) exécutée sous forme de levier de commutation dans le poste de conduite d'une locomotive et fournissant un (ou plusieurs) signal/aux de mesure (M) électriques correspondants, avec un convertisseur analogique-numérique (5) disposé en aval produisant sur sa sortie des motifs binaires, auquel est connecté en aval un dispositif d'analyse (7), qui contient un module de reproduction, dans lequel respectivement plusieurs motifs binaires dont les valeurs sont proches sont reproduits ensemble sur respectivement une valeur positionnelle correspondante de plusieurs valeurs positionnelles (St1 à Stn) pour des domaines de position de la pièce mécanique mobile (1), et
contient un module de sortie (10), qui détecte la valeur positionnelle (St1 à Stn) pour la position, sur laquelle, en cas de motif binaire correspondant à une position détectée de la pièce mobile (1), ce motif binaire est représenté et fournit au moins une grandeur de réaction correspondante (R), le module de reproduction
étant un module de table de conversion (6) qui présente, dans une colonne (8) plusieurs domaines de motifs binaires (B1 à Bn), chaque domaine de motif binaire (B1 à Bn) contenant respectivement plusieurs motifs binaires dont les valeurs sont proches et qui présente, dans une autre colonne (9), les valeurs positionnelles (St1 à Stn) correspondant aux domaines de motifs binaires (B1 à Bn) pour les domaines de position de la pièce mécanique mobile (1), et le module de sortie (10), dans le cas d'un motif binaire correspondant à une position détectée de la pièce mobile (1) détectant par le biais du domaine de motif binaire associé (B1 à Bn) la valeur positionnelle (St1 bis Stn) correspondant à ce domaine de motif binaire, pour la position et fournissant au moins une grandeur de réaction (R) correspondante.

2. Système selon la revendication 1,
**caractérisé en ce que** le module table de conversion (6) est configuré de sorte que respectivement un nombre également grand de motifs binaires dont les valeurs sont proches, forment respectivement un domaine de motifs binaires (B1 à Bn) .

3. Système selon la revendication 1,
**caractérisé en ce que** le module table de conversion est configuré de sorte qu'au moins un domaine de motif binaire puisse être formé d'un nombre plus grand de motifs binaires que les domaines de motifs binaires restants.

4. Système selon l'une des revendications précédentes,
**caractérisé en ce que** la pièce mécanique mobile (1) est une pièce mobile à rotation et le capteur de position est un capteur d'angle de rotation (3).

5. Système selon la revendication 4,
**caractérisé en ce que** la pièce mobile (1) à rotation est une pièce mobile à rotation en continu ou par gradations.

6. Système selon la revendication 4 ou 5,
**caractérisé en ce que** la pièce mobile (1) à rotation est un levier de commutation.

7. Système selon l'une des revendications 1 à 3,
**caractérisé en ce que** la pièce mobile mécanique est une pièce mobile à mobilité par translation et le capteur de position est un capteur de déplacement.

8. Système selon la revendication 7,
**caractérisé en ce que** la pièce mobile à mobilité par translation est une pièce mobile à mobilité en continu ou par gradations.

9. Système selon la revendication 8,
**caractérisé en ce que** la pièce mobile à mobilité par translation est un élément de commande.
